# FASCICULE DE BREVET EUROPEEN

(11) **EP 0 635 462 B1**
(45) Date de publication et mention de la délivrance du brevet: **19.03.1997**
(21) Numéro de dépôt: 94401652.6
(22) Date de dépôt: 19.07.1994
(51) Int. Cl.: C03C 25/02, C08J 5/08

(54) **Fibres de verre destinées au renforcement de matrices organiques**
Glasfasern zur Verstärkung von organischen Matrizen
Glass fibres for reinforcement of organic matrixes

(30) Priorité: 22.07.1993 FR 9309050
(43) Date de publication de la demande: 25.01.1995
(73) Titulaire: VETROTEX FRANCE, F-73000 Chambéry (FR)
(72) Inventeur: Gasca, Jean-Philippe, F-73250 Saint Jean de la Porte (FR); Tardy, Gérard, F-38100 Grenoble (FR)
(74) Mandataire: Breton, Jean-Claude

(56) Documents cités:
- EP-A- 0 394 090
- EP-A- 0 491 204
- BE-A- 885 743
- CH-A- 647 484
- DE-B- 2 024 477
- US-A- 4 728 573
- US-A- 5 130 197
- DATABASE WPI Week 9313 Derwent Publications Ltd., London, GB; AN 93-104417 & JP-A-05 043 751 (ASAHI FIBERGLASS CO) , 23 Février 1993
- DATABASE WPI Week 8415 Derwent Publications Ltd., London, GB; AN 84-091647 & JP-A-59 038 254 (UBE IND KK) , 2 Mars 1984
- DATABASE WPI Week 8546 Derwent Publications Ltd., London, GB; AN 85-286233 & JP-A-60 195 120 (ASAHI CHEM IND KK) , 3 Octobre 1985

## Description

La présente invention concerne des fibres de verre revêtues d'une composition d'ensimage destinée à leur conférer certaines propriétés en vue du renforcement de matières organiques ou « matrices organiques ».

Plus précisément, la présente invention concerne des fibres de verre revêtues d'une composition d'ensimage appropriée et destinées au renforcement de matrices thermoplastiques, telles que les matrices polyoléfines et plus particulièrement les matrices polypropylènes. La présente invention concerne également les produits renforcés obtenus.

L'aptitude de la fibre de verre à recevoir différents ensimages créant une liaison entre le verre et la matrice qu'elle vise à renforcer confère à ladite fibre la possibilité d'être associée à de nombreuses matières polymères pour la fabrication de produits composites dont les propriétés, en particulier les propriétés mécaniques, sont meilleures que celles de la matière polymère non renforcée.

Les fibres de verre sont généralement revêtues d'ensimage alors qu'elles se présentent sous forme de filaments au sortir des filières, l'ensimage devant en premier lieu permettre d'assurer la liaison des filaments entre eux et la protection contre l'abrasion des fils obtenus par rassemblement des filaments. Simultanément, comme indiqué plus haut, l'ensimage favorise l'adhésion entre les fils de verre et la matière qu'ils doivent renforcer.

Dans le cas des fibres de verre destinées à renforcer des matrices thermoplastiques, telles que des matrices polyoléfines et notamment des matrices polypropylènes, il est connu d'utiliser des compositions d'ensimage à base d'une émulsion de polyoléfines de nature voisine de celle des polyoléfines constituant la matrice à renforcer. Il faut savoir également que la cohésion entre les fibres de verre et les matrices polyoléfines est facilitée par la présence, sur les polyoléfines de l'émulsion, de groupements réactifs, tels que des groupements carboxyles, aptes à réagir avec d'autres composés présents dans l'ensimage. La présence de telles polyoléfines greffées au sein de l'ensimage est d'autant plus nécessaire pour assurer une bonne liaison verre-matrice que lesdites matrices sont dépourvues, quant à elles, de tels groupements réactifs.

Afin d'améliorer la cohésion entre les matrices polyoléfines, greffées ou non, et les fibres de verre, il est par ailleurs connu d'utiliser pour le renforcement desdites matrices des fibres de verre revêtues d'une composition comprenant une émulsion de polyoléfines greffées par des acides et neutralisées par des diéthyléthanolamines en présence d'au moins un agent de couplage aminosilane de basicité supérieure à celle de la diéthyléthanolamine et réagissant avec les sels de polyoléfines neutralisées, et comprenant également au moins un agent stabilisant sous la forme d'un diacide ainsi qu'un agent filmogène collant. Cette composition, décrite dans le brevet US 5 130 197, implique généralement l'utilisation d'aminosilanes ayant des fonctions amines très réactives et/ou d'aminosilanes en quantité relativement importante, ceci étant notamment défavorable en termes de coût. Des phénomènes d'épaississement important lors de l'ajout de l'agent stabilisant ou des silanes au cours de la fabrication de l'ensimage sont par ailleurs constatés, cet épaississement pouvant, selon les cas, s'accentuer au cours du temps ou se stabiliser.

L'objet de l'invention est de fournir une solution plus économique et avantageuse au problème du renforcement des matrices organiques et notamment de fournir des fibres de verre revêtues d'une composition d'ensimage appropriée, lesdites fibres permettant l'obtention d'une bonne liaison verre-matrice dans la fabrication ultérieure de thermoplastiques renforcés, notamment de polyoléfines renforcées et, plus particulièrement, de polypropylènes renforcés.

Ce but est atteint grâce à des fibres de verre revêtues d'une composition d'ensimage comprenant :
(1) une émulsion aqueuse à base d'au moins une polyoléfine greffée par au moins un acide ou anhydride et neutralisée par au moins une alcoolamine,
(2) au moins un agent de couplage aminosilane,
(3) et au moins un agent stabilisant monoamine aliphatique primaire, secondaire ou tertiaire, miscible à l'eau et présentant un pK_{b} inférieur à la valeur du pK_{b} du groupement amine de l'agent de couplage plus 1.

Les fibres ensimées selon l'invention sont préparées selon des procédés connus en soi. L'un de ces procédés consiste à étirer des filets de verre fondu sous la forme de nappes de filaments continus à partir des orifices d'une ou plusieurs filières, à revêtir lesdits filaments de la composition d'ensimage selon l'invention avant de rassembler les filaments en question en un ou plusieurs fils. Ces fils peuvent ensuite être bobinés sur des supports en rotation avant de subir d'autres opérations, être répartis sur des convoyeurs en mouvement ou encore être coupés après formation. Ainsi, selon les caractéristiques mécaniques que l'on désire obtenir au niveau des produits renforcés et selon les méthodes de mise en oeuvre utilisées, la présentation des fibres de verre ensimées varie.

Les fibres de verre servant à renforcer les matrices thermoplastiques selon l'invention peuvent notamment se présenter sous forme de fils continus, de stratifils, de fils coupés, de mats... Ces fibres font généralement l'objet d'un séchage avant utilisation pour le renforcement des matrices organiques, l'eau incluse dans la composition d'ensimage pouvant nuire à la bonne adhésion verre-matrice.

Les polyoléfines précédemment mentionnées, qu'il s'agisse des polyoléfines des matrices à renforcer ou des polyoléfines des émulsions utilisées dans les compositions d'ensimage, peuvent être des polyoléfines amorphes ou essentiellement cristallines (atactiques, isotactiques ou syndiotactiques), peuvent être des homopolymères ou des copolymères et peuvent être de masse moléculaire plus ou moins élevée. La ou les polyoléfines de la matrice à renforcer peuvent être greffées ou non, et au moins une polyoléfine de l'émulsion mentionnée dans la définition de l'invention est greffée par au moins un acide ou anhydride. De préférence, dans le cas où ladite émulsion comprend plusieurs polyoléfines, la plupart desdites polyoléfines sont greffées par au moins un acide ou anhydride. Les acides ou anhydrides greffés sur les polyoléfines peuvent être notamment des acides carboxyliques éthyléniquement substitués et/ou des acides polycarboxyliques et/ou des anhydrides d'acide... comme par exemple l'acide (ou l'anhydride) maléique, acrylique, méthacrylique, itaconique ou citraconique.

Dans la plupart des cas, les polyoléfines selon l'invention sont des polyéthylènes et/ou des polypropylènes, favorablement greffés, dans le cas de la ou des polyoléfines de l'émulsion, par un ou des anhydrides maléiques. De façon particulièrement préférée, les polyoléfines selon l'invention sont des polypropylènes, des mélanges de polypropylènes ou des dérivés de polypropylènes, la ou les polyoléfines de l'émulsion étant greffées par un ou des anhydrides maléiques.

La ou les polyoléfines de l'émulsion mentionnée dans la définition de l'invention ont principalement un rôle de co-agent de couplage vis-à-vis de la matrice à renforcer, en même temps qu'un rôle d'agent filmogène collant et éventuellement d'agent lubrifiant. Le taux initial de polyoléfine(s) au sein de la composition d'ensimage mentionnée dans la définition de l'invention et telle que déposée sur les filaments de verre devant constituer les fibres selon l'invention est, de préférence, compris entre 1 et 10 % en poids de ladite composition, le taux en poids d'émulsion de polyoléfine(s) utilisée pour réaliser ladite composition étant, bien évidemment, supérieur au taux de polyoléfine(s) précité et dépendant de l'émulsion utilisée. Les émulsions aqueuses de polyoléfine constituent, à ce sujet, la forme la plus adaptée pour traiter la surface du verre. Ces émulsions sont réalisées selon des procédés tels que celui décrit dans la demande de brevet FR-A-2 044 805 ou, pour les polyoléfines de masse moléculaire élevée, selon le procédé décrit dans la demande de brevet EP-A-0 394 090.

Ces méthodes impliquent notamment de mélanger la quantité désirée de polyoléfine(s) en présence d'une base appropriée et de surfactants, sous pression et à une température supérieure au point de fusion des polyoléfines. La base susmentionnée sert à neutraliser la ou les fonctions acides portées par la ou les polyoléfines greffées, à la suite de quoi les surfactants appropriés permettent la formation de l'émulsion de polyoléfine(s) neutralisée(s) que l'on refroidit par la suite.

La base susmentionnée consiste, de préférence, en une alcoolamine telle que le diméthylaminopropanol ou la diméthyléthanolamine. Les surfactants peuvent être, quant à eux, tout surfactant communément employé pour émulsionner des polyoléfines.

Selon la présente invention, la composition servant à revêtir les fibres comprend, outre l'émulsion citée précédemment, au moins un agent de couplage aminosilane. Cet agent de couplage peut être, par exemple, un aminosilane mono- ou diaminé, tel qu'un gamma-aminopropyltriéthoxy silane ou un N-bêta (aminoéthyl) gamma-aminopropyltriméthoxysilane ou tout autre aminosilane similaire. Il permet de coupler les fibres de verre revêtues de la composition d'ensimage à la matrice polyoléfine destinée à être renforcée. De préférence, le taux initial d'aminosilane(s) au sein de la composition d'ensimage mentionnée dans la définition de l'invention et telle que déposée sur les filaments de verre devant constituer les fibres selon l'invention, est compris entre 0,1 et 2 % en poids de ladite composition et, de façon particulièrement préférée, entre 0,5 et 1,5 % en poids de ladite composition.

La composition d'ensimage servant à revêtir les fibres selon l'invention comprend également au moins un agent stabilisant permettant de stabiliser la composition, cet agent consistant en une monoamine aliphatique primaire, secondaire ou tertiaire, miscible à l'eau et présentant un pK_{b} inférieur à la valeur du pK_{b} du groupement amine de l'agent de couplage plus 1.

Par « monoamine aliphatique primaire, secondaire ou tertiaire », on entend, selon l'invention, un composé présentant une fonction amine primaire, secondaire ou tertiaire et ne comprenant pas de cycle aromatique. L'agent stabilisant monoamine mentionné dans la définition de l'invention se caractérise notamment par le fait qu'il présente une basicité supérieure ou éventuellement légèrement inférieure (dans les limites indiquées dans la revendication 1 par l'intermédiaire des pK_{b}) à la basicité du groupement amine de l'agent de couplage. De préférence, le pK_{b} de l'agent stabilisant monoamine mentionné dans la définition de l'invention est inférieur ou égal à la valeur du pK_{b} du groupement amine de l'agent de couplage plus 0,8 et, de façon particulièrement préférée, est inférieur ou égal à la valeur du pK_{b} du groupement amine de l'agent de couplage (c'est-à-dire présente la même basicité ou une basicité supérieure à la basicité du groupement amine de l'agent de couplage). L'utilisation d'un agent stabilisant sous la forme d'une monoamine basique telle que mentionnée dans la définition de l'invention offre un très grand intérêt par rapport à l'utilisation d'un agent stabilisant tel qu'un diacide selon, par exemple, le brevet US 5 130 197. Les avantages conséquemment obtenus seront notamment mis en évidence dans la description suivante.

L'agent stabilisant monoamine tel que mentionné dans la définition de l'invention peut consister en une alcoolamine, une alkylamine, une étheramine, etc... ladite amine remplissant les conditions données dans la définition de l'invention. A titre d'exemples non limitatifs, dans le cas où l'agent de couplage mentionné dans la définition de l'invention consiste en un gamma-aminopropyltriéthoxysilane, l'agent stabilisant monoamine tel que mentionné dans la définition de l'invention peut consister notamment en une N-méthyléthanolamine, ou en une 3-méthoxypropylamine, ou en une butylamine, etc... et consiste préférentiellement en une butylamine, et dans le cas où l'agent de couplage mentionné dans la définition de l'invention consiste en un N-bêta (aminoéthyl) gamma-aminopropyltriméthoxysilane, l'agent stabilisant monoamine tel que mentionné dans la définition de l'invention peut consister notamment en un diméthylaminométhylpropanol, ou en un aminométhylpropanol, ou en une N-méthyléthanolamine, ou en une 3-méthoxypropylamine, ou en une butylamine, etc... et consiste préférentiellement en une N-méthyléthanolamine, une 3-méthoxypropylamine ou une butylamine.

Avantageusement, le ou les agents stabilisants monoamine utilisés dans l'invention se trouvent en excès par rapport à l'agent ou aux agents de couplage aminosilane dans la composition d'ensimage, quelle que soit la proportion de ce(s) dernier(s) au sein dudit ensimage. Un excès d'agent stabilisant monoamine par rapport à l'agent de couplage aminosilane dans la composition d'ensimage mentionnée dans la définition de l'invention est notamment souhaitable dans le cas où le pK_{b} dudit agent stabilisant est supérieur ou égal à la valeur du pK_{b} du groupement amine de l'agent de couplage. Selon un mode de réalisation préféré de l'invention, le taux d'amines en moles au sein de la composition d'ensimage mentionnée dans la définition de l'invention, ce taux prenant en considération à la fois la ou les alcoolamines servant de base neutralisante et la ou les monoamines servant d'agent stabilisant, est d'au moins deux fois supérieur à celui des aminosilanes. Selon un mode de réalisation avantageux de l'invention, le taux initial d'agent(s) stabilisant(s) monoamine en moles au sein de la composition d'ensimage mentionnée dans la définition de l'invention et telle que déposée sur les filaments de verre devant constituer les fibres selon l'invention, est environ deux fois supérieur au taux d'agent(s) de couplage aminosilane. De façon générale, le taux d'agent(s) stabilisant(s) monoamine en poids au sein de ladite composition est compris entre 0,1 et 2 %. Il est permis de supposer, sans que cette supposition ne limite la portée de notre invention, que, du fait de la réactivité du ou des agent(s) stabilisant(s) monoamine utilisé(s) et, le cas échéant, de la présence d'un excès d'amines par rapport à l'agent ou aux agents de couplage utilisé(s), l'interaction, au niveau de la composition d'ensimage devant revêtir les filaments, entre le ou les agent(s) de couplage aminosilane et la ou les polyoléfines de l'émulsion est considérablement réduite. De ce fait, la composition d'ensimage devant revêtir les fibres de verre selon l'invention est plus stable et garde une faible viscosité permettant notamment sa mise en oeuvre dans les procédés de fabrication de fils de verre ensimés pouvant être utilisés pour réaliser les fibres de verre selon l'invention. Les phénomènes d'épaississement constatés notamment dans le cas des compositions d'ensimage décrites dans le brevet US 5 130 197 sont ainsi réduits dans les compositions d'ensimage mentionnées dans la définition de l'invention.

La ou les monoamines utilisée(s) dans l'invention se volatilisant généralement à basse température (moins de 150°C) se libèrent par la suite, soit au moment du séchage, soit lors de la réalisation d'un composite, permettant ainsi la création au niveau du composite final de fortes interactions entre le ou les agent(s) de couplage aminosilane et la ou les polyoléfines de la matrice. Ces interactions se font par l'intermédiaire de polyoléfine(s) greffée(s) de l'émulsion mais aussi, éventuellement, dans le cas où la ou les polyoléfines de la matrice sont elles-mêmes greffées, directement au niveau de la ou des polyoléfines de la matrice.

La composition d'ensimage revêtant les fibres selon l'invention permet ainsi la fabrication de composites possédant de bonnes propriétés mécaniques, ainsi qu'illustré par la suite dans les exemples. Par ailleurs, du fait du faible taux de silane et du choix de l'agent stabilisant, la composition d'ensimage revêtant les fibres selon l'invention est plus économique et, comme explicité précédemment, ne rencontre pas lors de sa préparation de phénomènes d'épaississement important comme c'est le cas pour la composition d'ensimage décrite dans le brevet US 5 130 197.

La composition d'ensimage revêtant les fibres selon l'invention présente également l'avantage de garantir une bonne cohésion filamentaire au sein des fils sans nécessité d'un recours, dans la plupart des cas, à un agent filmogène collant, contrairement à la composition d'ensimage décrite dans le brevet US 5 130 197 et contenant nécessairement un agent filmogène collant.

Cet avantage se révèle particulièrement intéressant dans le cas des fils coupés où l'utilisation d'une composition d'ensimage telle que mentionnée dans la définition de l'invention permet l'obtention de fils coupés d'intégrité particulièrement satisfaisante, comme illustré ultérieurement dans les exemples.

La présence d'un agent filmogène dans la composition revêtant les fibres selon notre invention peut se révéler néanmoins intéressante dans le cas de la fabrication de stratifils directs ou assemblés. L'agent filmogène utilisé consiste alors préférentiellement en un polyuréthane, un polymère époxy ou un copolymère époxy polyuréthane.

Hormis les composés cités, la composition d'ensimage revêtant les fibres selon l'invention peut également contenir tout type d'additif habituellement utilisé dans ce genre de composition et notamment un agent lubrifiant et/ou un agent mouillant. Le pH de ladite composition d'ensimage est, dans la plupart des cas, supérieur à 9, l'extrait sec de ladite composition est préférentiellement compris entre 1 et 15 % et la perte au feu sur les fibres selon l'invention est, préférentiellement, comprise entre 0,5 et 1,5 % et, de façon particulièrement préférée, entre 0,5 et 1 %.

Les exemples suivants illustrent différents résultats de viscosité, d'intégrité et de propriétés mécaniques obtenus en comparant respectivement les compositions d'ensimage et les matrices renforcées à l'aide des fibres selon la présente invention avec des compositions d'ensimage et des matrices renforcées à l'aide de fibres telles que celles décrites dans le brevet US 5 130 197.

### EXEMPLE 1

Cet exemple permet de comparer les viscosités cinématiques mesurées par tube capillaire calibré lors de la préparation de compositions d'ensimage comprenant : une émulsion aqueuse à base de polypropylène(s) greffé(s) par des anhydrides maléiques, un agent de couplage aminosilane monoaminé et respectivement un agent stabilisant diacide ou un agent stabilisant monoamine tel que mentionné dans la définition de l'invention.

L'émulsion de polypropylène(s) utilisée, désignée par A, est une émulsion commercialisée par National Starch sous la référence Protolube RL-5440 ; cette émulsion est neutralisée par une diéthyléthanolamine ; l'agent de couplage utilisé, désigné par B, est un gamma-aminopropyltriéthoxy silane commercialisé par Union Carbide sous la référence Silane A 1100 ; l'agent stabilisant diacide, désigné par C, est l'acide maléique et l'agent stabilisant monoamine, désigné par D, est la N-méthyléthanolamine. Les différentes compositions d'ensimage sont, au besoin, complétées avec un copolymère époxy polyuréthane commercialisé par Shell US sous la référence CMD-W 60-5520 de façon à avoir, pour chaque composition, un extrait sec constant de 5 % environ, ce copolymère n'influant pas sur la viscosité.

Les proportions données dans le tableau suivant sont les pourcentages en poids des produits A, B, C ou D introduits dans l'ensimage, le pourcentage complémentaire représentant l'eau ajoutée. Les taux réels en poids au sein de l'ensimage des composés actifs issus de chacun de ces produits sont indiqués entre parenthèses, les produits B, C et D étant purs mais le produit A comprenant à la fois les composés actifs recherchés et de l'eau.

Le taux d'agent stabilisant diacide est de l'ordre des taux indiqués dans le brevet US 5 130 197 pour cet agent, celui de l'agent stabilisant monoamine étant choisi conformément à la présente invention.

| | Compositions | | | | | |
|---|---|---|---|---|---|---|
| | 1 | 2 | 3 | 4 | 5 | 6 |
| % Emulsion A | 4,06 (1,34) | 4,06 (1,34) | 6,09 (2,01) | 6,09 (2,01) | 10,15 (3,35) | 10,15 (3,35) |
| % Agent de couplage B | 1,10 (1,10) | 1,10 (1,10) | 1,10 (1,10) | 1,10 (1,10) | 1,10 (1,10) | 1,10 (1,10) |
| % Agent stabilisant diacide C | 0,35 (0,35) | | 0,35 (0,35) | | 0,35 (0,35) | |
| % Agent stabilisant alcoolamine D | | 1,00 (1,00) | | 1,00 (1,00) | | 1,00 (1,00) |
| Viscosité en centistokes à 25°C | 1,90 | 1,40 | 2,20 | 1,43 | 3,70 | 1,54 |

On observe donc que les compositions 2, 4 et 6 recourant à un agent stabilisant monoamine défini selon la présente invention présentent une viscosité initiale inférieure à celle des compositions 1, 3 et 5 recourant à un agent stabilisant diacide. L'écart entre les viscosités initiales est également plus important lorsque la quantité d'émulsion de polypropylène au sein de la composition est plus importante.

Il a par ailleurs été remarqué que cet écart se creuse lorsque l'émulsion de polypropylène utilisée est plus réactive et/ou, également, lorsque l'aminosilane utilisé est un N-bêta (aminoéthyl) gamma aminopropyltriméthoxysilane commercialisé par Union Carbide sous la référence Silane A 1120. La viscosité de la composition utilisant un agent stabilisant diacide dépasse, dans ce dernier cas, 10 centistokes à 20°C, celle de la composition utilisant un agent stabilisant monoamine étant du même ordre de grandeur que précédemment (de l'ordre de 1,40 centistokes).

### EXEMPLE 2

Cet exemple illustre les résultats obtenus en terme d'intégrité dynamique en comparant des fils coupés revêtus de compositions d'ensimage utilisant un agent stabilisant monoamine défini selon l'invention et des fils coupés revêtus de compositions d'ensimage utilisant un agent stabilisant diacide.

Par intégrité dynamique, il faut entendre l'évaluation du taux de bourre de fils coupés à travers le test suivant : les fils coupés sont mélangés avec des granulés de matière thermoplastique puis mis en rotation pendant une dizaine de minutes avant d'être récupérés et passés sur un tamis vibrant. La bourre subsistante ne passant pas à travers le tamis est ensuite récupérée et pesée pour établir le taux de bourre correspondant. L'intégrité est alors d'autant plus grande que ce taux est plus faible.

Les compositions 7 et 8 comprennent une émulsion à base de polypropylènes greffés par des anhydrides maléiques, commercialisée par National Starch sous la référence Protolube RL-5440, à un taux de 13,6 %, un agent de couplage gamma aminopropyltriéthoxy silane, commercialisé par Union Carbide sous la référence A 1100, à un taux de 1,1 % et, pour la composition 7, un agent stabilisant N-méthyléthanolamine à un taux de 1 % ou, pour la composition 8, un agent stabilisant acide maléique à un taux de 0,35 %, l'extrait sec des compositions étant respectivement de 5,2 % et de 5,5 % et les compositions étant dépourvues d'agent filmogène collant.

Les compositions 9 et 10 comprennent une émulsion à base de polypropylènes greffés par des anhydrides maléiques, un agent de couplage N-bêta (aminoéthyl) gamma aminopropyltriéthoxy silane commercialisé par Union Carbide sous la référence Silane A 1120 et, pour la composition 9, un agent stabilisant aminométhylpropanol ou, pour la composition 10, un agent stabilisant acide maléique, la composition 10 comprenant, en outre, un agent filmogène collant époxy polyuréthane à un taux de 40 % par rapport à la quantité de polypropylène dans l'émulsion et les deux compositions ayant un extrait sec de 6,9 %.

Les viscosités initiales des différentes compositions et la perte au feu sur les fils ensimés sont également mesurées.

| | Compositions | | | |
|---|---|---|---|---|
| | 7 | 8 | 9 | 10 |
| Viscosité en centistokes à 25°C | 1,55 | 4,00 | 1,50 | 5,50 |
| % Perte au feu | 0,70 | 0,64 | 0,65 | 0,74 |
| % Bourre | 1,4 | > 10,0 | 0,1 | 2,6 |

Encore une fois, il est permis d'observer que la viscosité initiale des compositions 7 et 9 utilisant un agent stabilisant monoamine est inférieure à celle des compositions 8 et 10 utilisant un agent stabilisant diacide, les pertes au feu étant, par ailleurs, dans chaque cas, du même ordre de grandeur.

En outre, les résultats d'intégrité dynamique montrent que l'utilisation d'une composition 8 comprenant un agent stabilisant diacide et dépourvue d'agent filmogène collant pour revêtir les fils conduit à des fils présentant une très mauvaise intégrité dynamique. En effet, les fils sont considérés comme présentant une mauvaise intégrité dès que le taux de bourre mesuré dépasse 2 %.

Les fils revêtus d'une composition 10 comprenant cette fois un agent filmogène collant en plus de l'agent stabilisant diacide présentent une meilleure intégrité dynamique que celle des fils revêtus de la composition 8, cette intégrité étant malgré tout insatisfaisante et bien moins bonne que celle des fils revêtus d'une composition comprenant un agent stabilisant monoamine telle que décrite dans l'invention.

### EXEMPLE 3

Cet exemple illustre les résultats en terme de propriétés mécaniques obtenus sur des composites à 30 % en poids de fibres de verre, la matrice renforcée étant dans chaque cas une matrice polypropylène, commercialisée par Atochem sous la référence Appryl 3030, additionnée de 5 % de polypropylène greffé, commercialisé par BP Chemicals sous la référence Polybond 3002. Les fils de verre utilisés pour renforcer les matrices sont respectivement revêtus des compositions 7 à 11, les compositions 7 à 10 étant celles décrites dans l'exemple 2 et la composition 11 étant identique à la composition 7 décrite dans l'exemple 2 mais comprenant, au lieu d'un agent stabilisant N-méthyléthanolamine à un taux de 1 %, un agent stabilisant butylamine à un taux de 0,7 %.

Les contraintes de rupture en traction, flexion, les résistances aux chocs Charpy et Izod sont mesurées dans les conditions définies respectivement par les normes ISO R 527, ISO R 178, ISO R 179 et ISO R 180.

| | Matrices renforcées à l'aide des fibres revêtues des compositions | | | | |
|---|---|---|---|---|---|
| | 7 | 8 | 11 | 9 | 10 |
| Contraintes traction en MPa | 86,5 | 82 | 89 | 91 | 89 |
| Contrainte flexion en MPa | 131,5 | 123,5 | 137 | 140 | 137 |
| Contrainte flexion en MPa après traitement thermique des fils | - | - | - | 122 | 120 |
| Choc Charpy en kJ/m² | 34,5 | 31 | 40 | 34 | 30 |
| Choc Charpy en kJ/m² après traitement thermique des fils | - | - | - | 31 | 27 |
| Choc Izod entaillé en J/m | 135 | 117 | 151 | 133 | 123 |
| Choc Izod entaillé en J/m après traitement thermique des fils | - | - | - | 123 | 108 |

Les résultats obtenus en propriétés mécaniques sont meilleurs dans le cas de matrices renforcées à l'aide de fibres selon l'invention que ceux obtenus dans le cas de matrices renforcées à l'aide de fibres telles que celles décrites dans le brevet US 5 130 197.

Le traitement thermique des fils, effectué à 170°C pendant 4 heures, simule les effets de vieillissement au niveau des fils et conduit à des composites présentant des propriétés mécaniques également satisfaisantes.

On observe également que les valeurs de contraintes de rupture en traction, flexion et de résistances aux chocs Charpy et Izod obtenues en utilisant des fibres de verre selon l'invention revêtues d'un ensimage comprenant comme agent stabilisant une butylamine sont de 3 à 15 % plus élevées que les valeurs obtenues en utilisant des fibres de verre selon l'invention revêtues d'un ensimage identique mais comprenant un agent stabilisant N-méthyléthanolamine au lieu d'un agent stabilisant butylamine. L'utilisation d'un agent stabilisant butylamine dans la composition d'ensimage revêtant les fibres selon l'invention donne donc des résultats particulièrement intéressants au niveau des composites réalisés à partir desdites fibres, le taux en poids de butylamine utilisé étant, par ailleurs, relativement faible.

Les fibres de verre ensimées selon la présente invention sont destinées à renforcer, notamment, des matrices thermoplastiques telles que des polyoléfines, homopolymères ou copolymères, greffées ou non et, plus particulièrement, des matrices polypropylènes plus économiques et conférant aux produits composites obtenus des propriétés intéressantes.

## Revendications

1. Fibres de verre destinées au renforcement de matières thermoplastiques, caractérisées en ce qu'elles sont revêtues d'une composition d'ensimage comprenant :
(1) une émulsion aqueuse à base d'au moins une polyoléfine greffée par au moins un acide ou anhydride et neutralisée par au moins une alcoolamine,
(2) au moins un agent de couplage aminosilane,
(3) et au moins un agent stabilisant monoamine aliphatique primaire, secondaire ou tertiaire, miscible à l'eau et présentant au pK_{b} inférieur à la valeur du pK_{b} du groupement amine de l'agent de couplage plus 1.

2. Fibres de verre selon la revendication 1, caractérisées en ce que la ou les polyoléfines sont des polypropylènes, des mélanges de polypropylènes ou des dérivés de polypropylènes, la ou lesdites polyoléfines pouvant être des homopolymères ou des copolymères.

3. Fibres de verre selon l'une des revendications 1 ou 2, caractérisées en ce que la ou les polyoléfines de l'émulsion sont greffées par au moins un anhydride maléique.

4. Fibres de verre selon l'une des revendications 1 à 3, caractérisées en ce que l'agent stabilisant présente un pK_{b} inférieur ou égal à la valeur du pK_{b} du groupement amine de l'agent de couplage.

5. Fibres de verre selon l'une des revendications 1 à 4, caractérisées en ce que le ou les agents stabilisants monoamine se trouvent en excès par rapport à l'agent ou les agents de couplage aminosilane dans la composition d'ensimage.

6. Fibres de verre selon l'une des revendications 1 à 5, caractérisées en ce que le taux d'amines en moles, ce taux comprenant la ou les alcoolamines neutralisant la ou les polyoléfines de l'émulsion et comprenant le ou les agents stabilisants monoamine, est d'au moins deux fois supérieur à celui du ou des agents de couplage aminosilane dans la composition d'ensimage.

7. Fibres de verre selon l'une des revendications 1 à 6, caractérisées en ce que l'agent stabilisant monoamine est une alcoolamine, une alkylamine ou une étheramine telles que l'aminométhylpropanol, la N-méthyléthanolamine, le diméthylaminométhyl propanol, la butylamine ou la 3 méthoxypropylamine.

8. Fibres de verre selon l'une des revendications 1 à 7, caractérisées en ce que la ou les polyoléfines greffées sont neutralisées par au moins une alcoolamine telle que le diméthylaminopropanol ou la diméthyléthanolamine.

9. Fibres de verre selon l'une des revendications 1 à 8, caractérisées en ce que l'agent de couplage aminosilane est un aminosilane mono- ou diaminé tel qu'un gamma-aminopropyltriéthoxy silane ou un N-bêta (aminoéthyl) gamma-aminopropyltriéthoxy silane.

10. Fibres de verre selon l'une des revendications 1 à 9, caractérisées en ce que la composition d'ensimage comprend également au moins un agent filmogène collant tel qu'un polyuréthane, un polymère époxy ou un copolymère époxy polyuréthane.

11. Fibres de verre selon l'une des revendications 1 à 10, caractérisées en ce que la composition d'ensimage comprend, en outre, un agent lubrifiant et/ou un agent mouillant.

12. Fibres de verre selon l'une des revendications 1 à 11, caractérisées en ce que le pH de la composition d'ensimage est supérieur à 9.

13. Fibres de verre selon l'une des revendications 1 à 12, caractérisées en ce que l'extrait sec de la composition d'ensimage est compris entre 1 et 15 % en poids.

14. Fibres de verre selon l'une des revendications 1 à 13, caractérisées en ce que le taux de perte au feu varie entre 0,5 et 1,5 %.

15. Matrices thermoplastiques renforcées par des fibres de verre telles que définies dans les revendications 1 à 14.

## Claims

1. Glass fibres for reinforcing thermoplastic materials, characterized in that they are coated with a sizing composition comprising:
(1) an aqueous emulsion based on at least one polyolefin grafted by at least one acid or anhydride and neutralized by at least one alcoholamine;
(2) at least one aminosilane coupling agent;
(3) and at least one primary, secondary, or tertiary aliphatic monoamine stabilizing agent which is miscible with water and has a pK_{b} value lower than the pK_{b} value of the amine group of the coupling agent, plus 1.

2. Glass fibres according to Claim 1, characterized in that the polyolefin or polyolefins are polypropylenes, mixtures of polypropylenes, or polypropylene derivatives, the said polyolefin or polyolefins being homopolymers or copolymers.

3. Glass fibres according to any one of Claims 1 and 2, characterized in that the polyolefin or polyolefins of the emulsion are grafted by at least one maleic anhydride.

4. Glass fibres according to one of Claims 1 to 3 characterized in that the stabilizing agent has a pK_{b} value lower than or equal to the pk_{b} value of the amine group of the coupling agent.

5. Glass fibres according to any one of Claims 1 to 4, characterized in that the monoamine stabilizing agents are present in excess in relation to the aminosilane coupling agent or agents in the sizing composition.

6. Glass fibres according to any one of Claims 1 to 5, characterized in that the proportion of amines in moles, this proportion comprising the alcoholamine or alcoholamines which neutralize the polyolefin or polyolefins of the emulsion and comprising the monoamine stabilizing agent or agents, is at least two times greater than that of the aminosilane coupling agent or agents in the sizing composition.

7. Glass fibres according to any one of Claims 1 to 6, characterized in that the monoamine stabilizing agent is an alcoholamine, an alkylamine, or an etheramine such as aminomethylpropanol, N-methylethanolamine, dimethylamino-methylpropanol, butylamine, or 3-methoxypropylamine.

8. Glass fibres according to any one of Claims 1 to 7, characterized in that the grafted polyolefins are neutralized by at least one alcoholamine such as dimethylaminopropanol or dimethylethanolamine.

9. Glass fibres according to any one of Claims 1 to 8, characterized in that the aminosilane coupling agent is a mono- or di-aminated aminosilane such as a gamma aminopropyltriethoxysilane or an N-beta (aminoethyl) gamma-aminopropyltriethoxysilane.

10. Glass fibres according to any one of Claims 1 to 9, characterized in that the sizing composition also comprises at least one adhesive film-forming agent such as a polyurethane, an epoxy polymer or an epoxy-polyurethane copolymer.

11. Glass fibres according to any one of Claims 1 to 10, characterized in that the sizing composition also comprises a lubricant and/or a wetting agent.

12. Glass fibres according to any one of Claims 1 to 11, characterized in that the pH of the sizing composition is greater than 9.

13. Glass fibres according to any one of Claims 1 to 12, characterized in that the solids content of the sizing composition is between 1 and 15% by weight.

14. Glass fibres according to any one of Claims 1 to 13, characterized in that the ignition loss rate varies between 0.5 and 1.5%.

15. Thermoplastic matrices reinforced by glass fibres as defined in Claims 1 to 14.

## Patentansprüche

1. Glasfasern zur Verstärkung von Thermoplasten, **dadurch gekennzeichnet, daß** sie mit einer Schlichtezusammensetzung beschichtet sind, die
(1) eine wäßrige Emulsion auf der Grundlage wenigstens eines Polyolefins, auf das mindestens eine Säure oder ein Anhydrid gepfropft und das durch mindestens einen Aminoalkohol neutralisiert ist,
(2) mindestens einen Silylamin-Haftvermittler und
(3) mindestens ein primäres, sekundäres oder tertiäres aliphatisches Monoamin-Stabilisierungsmittel, das mit Wasser mischbar ist und einen pK_{B}-Wert aufweist, der kleiner als der pK_{B}-Wert der Aminogruppe/n des Haftvermittlers plus 1 ist,
umfaßt.

2. Glasfasern nach Anspruch 1, **dadurch gekennzeichnet, daß** das/die Polyolefin/e (ein) Polypropylen/e, Polypropylengemisch/e oder Polypropylenderivat/e ist/sind, wobei das/die Polyolefin/e (ein) Homo- oder Copolymer/e sein kann/können.

3. Glasfasern nach Anspruch 1 oder 2, **dadurch gekennzeichnet, daß** auf das/die Polyolefin/e der Emulsion mindestens ein Maleinsäureanhydrid gepfropft ist.

4. Glasfasern nach einem der Ansprüche 1 bis 3, **dadurch gekennzeichnet, daß** das Stabilisierungsmittel einen pK_{B}-Wert aufweist, der kleiner oder gleich dem pK_{B}-Wert der Aminogruppe/n des Haftvermittlers ist.

5. Glasfasern nach einem der Ansprüche 1 bis 4, **dadurch gekennzeichnet, daß** das/die Monoamin-Stabilisierungsmittel im Verhältnis zu dem/den Silylamin-Haftvermittler/n in der Schlichtezusammensetzung im Überschuß vorliegt/vorliegen.

6. Glasfasern nach einem der Ansprüche 1 bis 5, **dadurch gekennzeichnet, daß** der Aminanteil in mol, wobei dieser Anteil den/die Aminoalkohol/e, mit welchem/welchen das/die Polyolefin/e der Emulsion neutralisiert ist/sind, und das/die Monoamin-Stabilisierungsmittel umfaßt, mindestens zweimal so hoch wie der des/der Silylamin-Haftvermittler/s in der Schlichtezusammensetzung ist.

7. Glasfasern nach einem der Ansprüche 1 bis 6, **dadurch gekennzeichnet, daß** das Monoamin-Stabilisierungsmittel ein Aminoalkohol, ein Alkylamin oder ein Etheramin wie Aminomethylpropanol, N-Methylethanolamin, Dimethylaminomethylpropanol, Butylamin oder 3-Methoxypropylamin ist.

8. Glasfasern nach einem der Ansprüche 1 bis 7, **dadurch gekennzeichnet, daß** das/die gepfropfte/n Polyolefin/e durch mindestens einen Aminoalkohol wie Dimethylaminopropanol oder Dimethylethanolamin neutralisiert ist/sind.

9. Glasfasern nach einem der Ansprüche 1 bis 8, **dadurch gekennzeichnet, daß** der Silylamin-Haftvermittler ein mono- oder diaminiertes Silylamin wie ein γ-Aminopropyltriethoxysilan oder N-β-(Aminoethyl)-γ-aminopropyltriethoxysilan ist.

10. Glasfasern nach einem der Ansprüche 1 bis 9, **dadurch gekennzeichnet, daß** die Schlichtezusammensetzung auch mindestens einen filmbildenden Klebstoff wie ein Polyurethan, ein Epoxid-Polymer oder ein Polyurethan-Epoxid-Copolymer enthält.

11. Glasfasern nach einem der Ansprüche 1 bis 10, **dadurch gekennzeichnet, daß** die Schlichtezusammensetzung außerdem ein Gleitmittel und/oder ein oberflächenaktives Mittel enthält.

12. Glasfasern nach einem der Ansprüche 1 bis 11, **dadurch gekennzeichnet, daß** der pH-Wert der Schlichtezusammensetzung über 9 liegt.

13. Glasfasern nach einem der Ansprüche 1 bis 12, **dadurch gekennzeichnet, daß** der Feststoffgehalt der Schlichtezusammensetzung 1 bis 15 Gew.-% beträgt.

14. Glasfasern nach einem der Ansprüche 1 bis 13, **dadurch gekennzeichnet, daß** der Anteil an Glühverlust zwischen 0,5 und 1,5 % liegt.

15. Thermoplastische Matrizen, verstärkt durch Glasfasern, wie sie in den Ansprüchen 1 bis 14 definiert sind.
